# EUROPEAN PATENT SPECIFICATION

(11) **EP 2 432 716 B1**
(45) Date of publication and mention of the grant of the patent: **08.05.2013**
(21) Application number: 10723958.4
(22) Date of filing: 18.05.2010
(51) Int. Cl.: B65G 47/90, B65G 47/91, B65G 47/92, B65G 57/18

(54) **METHOD AND DEVICE FOR HANDLING, PARTICULARLY STACKING, PROFILE PARTS**
VERFAHREN UND VORRICHTUNG ZUM HANDHABEN, INSBESONDERE ZUM STAPELN, VON PROFILTEILEN
PROCÉDÉ ET DISPOSITIF DE MANIPULATION, EN PARTICULIER POUR EMPILER DES PROFILÉS

(30) Priority: 19.05.2009 EP 09160702
(43) Date of publication of application: 28.03.2012
(73) Proprietor: Verroeye, Thierry, 98000 Fontvielle (MC)
(72) Inventor: Verroeye, Thierry, 98000 Fontvielle (MC)
(74) Representative: Van Reet, Joseph
(86) International application number: PCT/EP2010/056789
(87) International publication number: WO 2010/133577

(56) References cited:
- WO-A2-2008/139409
- FR-A1- 2 843 366

## Description

Metal, plastic and other profiles are in general produced in continuous rolling and/or extrusion processes. The obtained continuous profiles are then cut into profile parts, which have to be properly collected, stacked and bundled. The present invention concerns a device for handling profile parts extending in a longitudinal direction and defining an axis parallel to said longitudinal direction, said device comprising means for linearly and/or axially positioning said parts perpendicularly to said longitudinal direction and for conveying said parts and/or for stacking said parts, said device comprising at least one supporting member arranged parallel to said longitudinal direction and provided for supporting means for picking up said parts.

Such a device is known from EP-A-1783072, which discloses a device for handling profile bars according to the preamble of claim 1, and which has the same applicant and inventor as the present invention. It provides a flexible and versatile method and device for handling profile parts, which is capable of properly positioning such profile parts, by imposing axial and linear movements perpendicular to the longitudinal direction of the profile parts, and more particularly provides an automated process able to handle (stack and bundle) the profile parts according to a programmed pattern. The device comprises at least one supporting beam placed parallel to the longitudinal direction of the profile parts whereas said beam is provided with means for picking up said parts, and whereas the device comprises means for axially rotating said beam and means for linearly moving said beam in two or more directions perpendicular to its longitudinal direction. This supporting beam provides a support of the profile parts, with multiple picking up / support / bearing positions along the length of the profile, and provides an accurate handling of the profile parts.

WO 2008/139409 discloses a device for handling sheets with two sets of two handling arms.

A drawback of the known methods and devices is that the number of profile parts that can be handled in a certain time slot is limited, which at its turn restricts production speed of the rolling and/or extrusion processes.

It is an object of the present invention to provide a handling device and method with a higher working rate.

To this end, a device for handling profile parts according to the invention is as stated in the appended claim 1.
The present invention enables to handle the profile parts by using moveable arms which can make horizontal and vertical movements with at least its second end. The arms should be provided to operate in at least two sets of which each set comprises at least two arms. This allows the sets of arms to successively handle profile parts. For example, it will be possible in this device for a second set of arms to pick up and move a further profile part, while a first set is still handling a profile part. This increases the working rate of the handling device. Because the second end of the arm is moveable in both a horizontal movement and a vertical movement with respect to the supporting member, a non loaded set of arms can move in a retracted manner, considered as from the supporting member and being a position closer to the supporting member, thereby avoiding collision with a profile part picked up by a loaded set of arms.

According to a first embodiment, said arms are each pivotably mounted with their first end to said supporting member and each comprise means for varying said distance so that said second end is moveable both in said horizontal and vertical movement with respect to said supporting member. In this manner, a simple construction is provided to let the second end of the arms move in a horizontal and a vertical movement with respect to the supporting member, namely by pivoting at the first end and by changing the distance between the first end and the second end. Preferably, in such configuration, the supporting member is located above said arms. In practice, the supporting member is in most cases located between the profile part picking-up-area and the laying-down-area. The effect of the supporting member being located above the arms is that in handling the profile parts, the pivoting arms substantially follow a pendulum motion. As a pendulum motion is at least partially caused by gravity force, less power is required to move the arms in this way. This not only results in a reduction of energy consumption, this also results in that engines can be downsized. Preferably, the means for changing the distance between the first end and the second end of said arm comprise telescoping means.

According to a second embodiment, said arms are arranged substantially upright and are each moveably guided in the upright direction by a first guide, which first guide is moveably guided in a lying direction by a second guide which is mounted to said supporting member, so that said second end is moveable both in said horizontal and vertical movement with respect to said supporting member. In this manner, a further simple construction is provided to let the second end of the arms move in a horizontal and a vertical movement with respect to the supporting member, namely by a lying and an upright guiding means in which each arm is guided.

Preferably, the at least four arms are arranged in at least two groups of arms located at intervals from each other in function of the length, shape and physical properties of the profile parts to be handled, each group comprising one arm of each of said pairs of arms. The arms being grouped together results in that one pair of arms can handle a profile part in substantially the same way as a second pair of arms because the different arms in the pairs are located with respect to the beam substantially at the same place. A first arm of a first pair is located in the same group, and thus at substantially the same place, as the first arm of a second pair. This results in a more uniformly handling of the profile parts irrespective of which pair handles the profile parts. Also programming the movements of the arms will be easier as each set of arms operates substantially in the same way. It will be clear that, since for example thin, plastic profile parts are less rigid than thick, metal profile parts, the intervals between groups of arms, and thus intervals between successive supporting locations at the profile parts can vary case by case. Physical properties of the profile parts comprise material strength and mass.

Preferably, said device comprises at least four groups of arms, of which each group comprises at least three arms. Three arms in each group of arms results in three sets of arms that are provided to work independent from each other. The effect is that handling speed is increased. The device comprising at least four groups results in an operational freedom because very long profile parts can be supported by at least four arms thereby increasing the accuracy and precision of the handling whereas short profile parts can be handled by for example only two of the at least four arms. This results in that the handling of the profile parts can be optimised depending on the length and nature of the profile parts to be handled.

Preferably, the device comprises computer controlled optical means, in particular a camera to detect the transverse sectional shape and position of the profile part, cooperating with said arms so as to allow proper pick up and controlled stacking of the profile parts. The use of computer controlled optical detection means, in particular camera ("image scanning") provides for increased accuracy in the handling (position of the arms, pick up approach) of the profile parts and can involve quality control of the rolling operation (checking the profile shape).

The method and device preferably involves suitable software (which is in itself easily designable by a skilled person) to program the handling and positioning of the parts in function of their shape and the user requirement (stacking and bundling pattern).

In a preferred embodiment of the invention the device further comprises computer controlled optical means for measuring the length of profile parts fed into the device, which computer controlled optical means may optionally cooperate with the computer controlled means for detecting the shape and position of the profile part. The use of computer controlled optical measuring means provides for on-line measurement of the length of the profile parts.

In a further preferred embodiment of the invention the device comprises a plurality of fixed measurement cells along the feed path of the profile parts into the device, cooperating with computer controlled optical means for measuring the length of profile parts to increase accuracy of the length measurement. The use of a plurality of fixed measurement cells provides for an improved dimensional accuracy (product tolerance) of the profile parts.

According to a further preferred feature of the invention the devices comprises means for controlling the cutting of the profiles fed to the device cooperating with computer controlled means for measuring the length of the profile parts.

Depending on the material of the profile parts (Ferro material or non Ferro material, such as in particular Aluminium) the means for picking up can comprise magnetic means, vacuum means or any other technique well known per se in the art.

The invention also provides a method for handling profile parts extending in a longitudinal direction and defining an axis parallel to said longitudinal direction, using at least two sets of arms, each set of arms comprising at least two arms, each arm has a first end and a second end located at a distance from said first end, and is moveably mounted to a supporting member in such a manner that said second end is both vertically and horizontally moveable with respect to said supporting member, which supporting member extends parallel to said longitudinal direction, in the method, each arm performs following succession of steps:
● grabbing a profile part of said profile parts with one of said at least two sets of arms at a picking-up-area using picking up means applied at the second end of the arms;
● moving said profile part, grabbed by said one of said at least two sets of arms, by having said one of said at least two sets of arms moved from said picking-up-area to a laying-down-area along a predetermined first path;
● releasing said profile part from said one of said at least two sets of arms at the laying-down-area;
● moving said one of said at least two sets of arms from said laying-down-area to said picking-up-area along a predetermined second path;
said moving said arms along said first and second path comprising a combined horizontal and vertical movement of said second end of said arms with respect to said supporting member, said succession of steps being performed synchronously by arms in a same set of arms, different sets of arms independently performing said succession of steps with a time difference between corresponding steps of said succession of steps as a result of which at a moment of time arms of a first set moving along said first path are aligned with arms of a second set moving along said second path, whereby said arms move in such a manner that at least at said moment of time, said second end of said arms moving along said second path is closer to said supporting member than said second end of said arms moving along said first path such as to avoid collision between said arms moving along said second path and said profile part moved by said arms moving along said first path.

This method provides to handle profile parts faster than prior art methods because this method provides different sets of arms to successively handle the profile parts. In the present method, it will be possible for a second set of arms to pick up a further profile part while a first set is still handling a profile part. This increases the working rate of the present method in view of the prior art methods. The non-loaded arm moving in one direction being more retracted then the loaded arm moving in the other direction at least at the moment where these arms are parallel, makes it possible for the device to handle multiple profile parts at a time. Therefore handling speed is increased.

Preferably, method comprises determining an axial releasing-orientation in which said profile part is to be released at the laying-down-area, said moving said profile part comprises:
● axially orienting said profile part into said determined axial releasing-orientation using rotation means comprised by said picking up means.

This feature increases the working precision in the method because the profile part is not only positioned linearly but also axially. In handling profile parts for the purpose of stacking, this is an important advantage as profiles having particular cross-sectional shape need a particular axial orientation for rigidly stacking them.

The invention will now be described in more details with respect to the drawings illustrating some preferred embodiments of the invention. In the drawings:
figure 1 shows a perspective view of the device according to the first embodiment the invention;
figure 2 shows a perspective view of a preferred first embodiment of the device according to the invention;
figures 3 to 7 shows a side view, looking in the longitudinal direction of the profile parts, of the arms in the device according to the first embodiment of the invention, at a different moment of time;
figure 8 shows a perspective view of the device according to the second embodiment the invention; and
figure 9 shows a side view, looking in the longitudinal direction of the profile parts, of the arms in the device according to the second embodiment of the invention.

In the drawings a same reference number has been allocated to a same or analogous element.

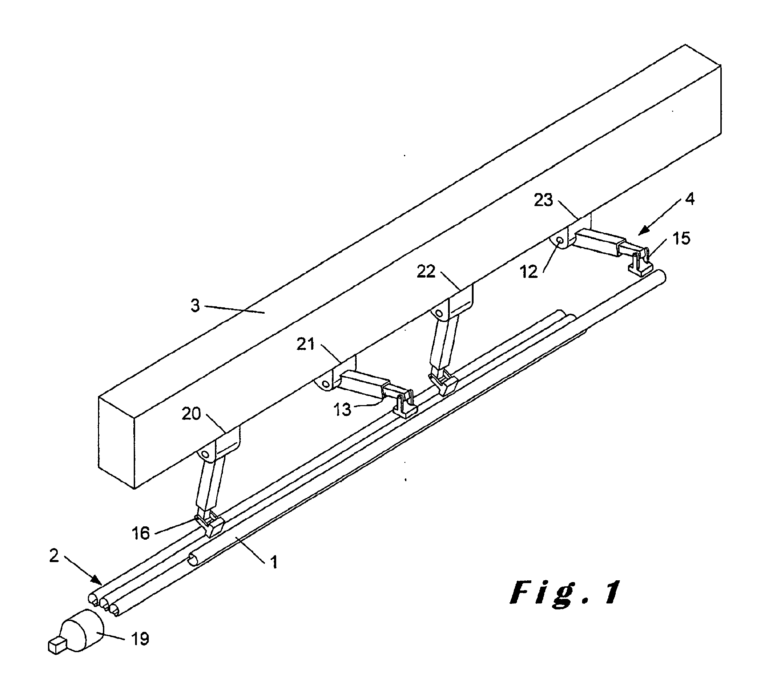

Figures 1 to 9 show a profile part to be handled 1, and a stack of profile parts 2. The profile part to be handled 1 may come from a production machine (not shown), which for example performs a continuous extrusion process. The profiles coming out of the continuous process get cut at a certain length into profile parts, and then are handled so as to collect and/or stack these profile parts. The stack of profile parts 2 in the figure is the place to which the profile parts to be handled 1 are to be moved. The invention is not limited to the stacking and collecting of profile parts which come from a production process. The invention can also serve to handle profile parts for example in a sorting machine, a restacking machine or other profile-part-handling apparatus.

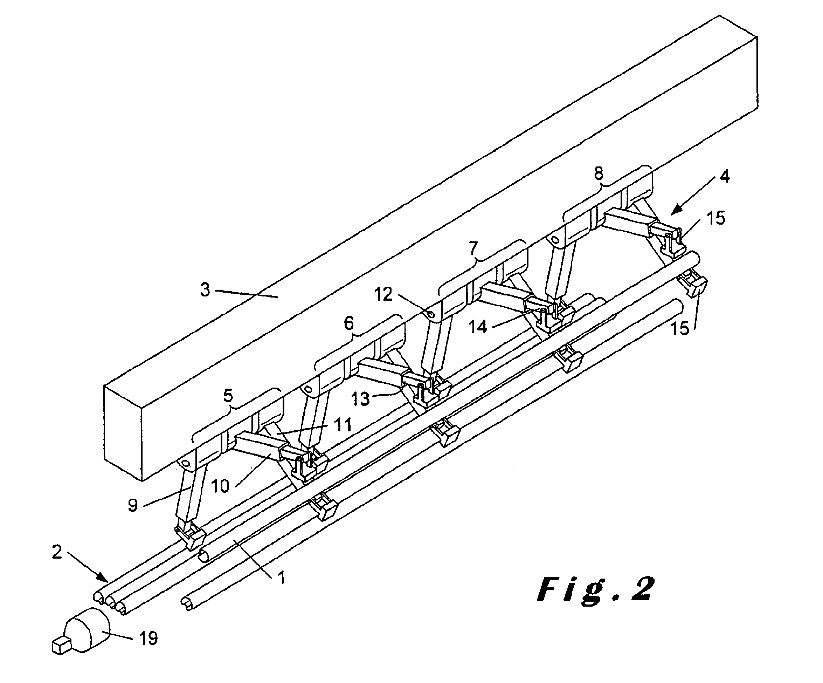

The first embodiment of the invention is shown in the figures 1-7. Figures 1 and 2 show the supporting member 3, which extends substantially in the same direction as the profile parts to be handled 1. The supporting member 3 serves as a support for a plurality of arms 4, which will be explained in more detail hereunder. It will be clear that a flour surface could serve as a supporting member 3 according to the invention, however in that case, arms should extend upwards. Preferably, the supporting member 3 is located above the profile parts to be handled 1 and above the stack 2 of profile parts. Furthermore, the supporting member 3 is preferably located, looking in the longitudinal direction of the profile parts and only considering the horizontal location, between the profile parts to be handled 1 and the stack of profile parts 2. In this configuration, the arms will perform at least partially a pendulum-like motion in handling the profiles.

Figure 1 shows a device according to the invention comprising four arms (for example 20, 21, 22 and 23) provided to operate pairwise in two pairs of arms (20 and 22; 21 and 23). The arms in a same pair cooperatively work together as a set of two arms to handle a profile part. The two pairs of arms thereby form two sets of arms. Arms in a same set of arms preferably move synchronously. A larger number of sets increases the maximal handling speed of the device because, the sets successively and independently handling profile parts, more profile parts can be handled at the same moment of time. Increasing the number of arms in a set increases the handling precision and flexibility of the device. A profile part being handled by a larger number of arms is supported at a larger number of locations thereby thus allowing less deformation of the profile part during handling. A shorter profile part can be handled by only a part of the larger number of arms in a set thus making the device more flexible in the handling of different sorts of profile parts.

Figure 2 shows a preferred embodiment of the invention, wherein a particular number of sets and a particular number of arms in a set are chosen, and in which the arms are grouped. The figure 2 shows four groups of arms 5, 6, 7 and 8 where each group comprises three arms 9, 10 and 11. In each group the different arms 9, 10 and 11 operate independently from each other. As can be seen in figure 2 the arms 9, respectively 10 and 11 of each of the groups 5, 6, 7 and 8 are equally positioned. So the arms 9, respectively 10 and 11 in the groups 5, 6, 7 and 8 form a first, respectively a second and a third set of arms. Consequently in each set of arms of the shown example there are four arms which cooperate together by executing a synchronised movement when handling a profile part. Generally it can thus be stated that the number of sets which can be formed, three in this embodiment, is determined by the number of arms per group which operate independent from each other. The number of arms per set also determines the total number of arms picking up a same profile part for handling the latter.

The arms are pivotably connected to the supporting member 3 with their first end 12 so that they can pivot in a plane perpendicular to the longitudinal direction of the profile parts. Each arm is provided with a telescoping member 13 which functions as a means to change the distance between the first end and the second end 14 of the arms. It will be clear that other means could serve this same purpose of changing said distance, according to the invention, for example a jointed two-link arm layout similar to human arms, such as generally used in a SCARA-robot.

Each arm comprises at their second end 14 a picking up means 15 formed by either magnetic, vacuum or other pick up means well known per se in the art, for snapping/picking up the profile parts, preferably specifically designed in function of the cross-sectional shape of the profile parts to be handled. The picking up means 15 are provided to axially rotate the profile parts to be handled. To this end, in the embodiment as shown in the figures, the picking up means 15 comprise a hinging means 16 having a rotational axis extending substantially parallel to the longitudinal axis of the profile parts.

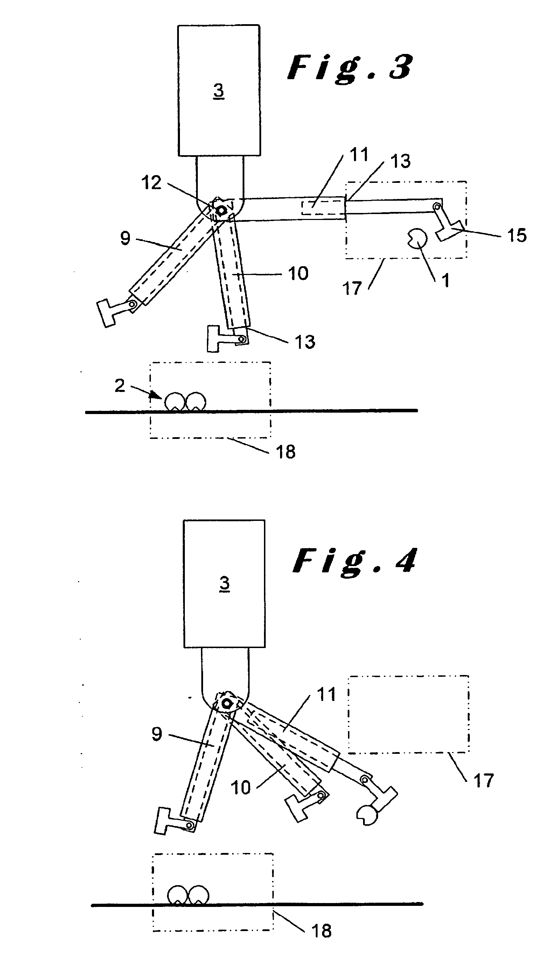

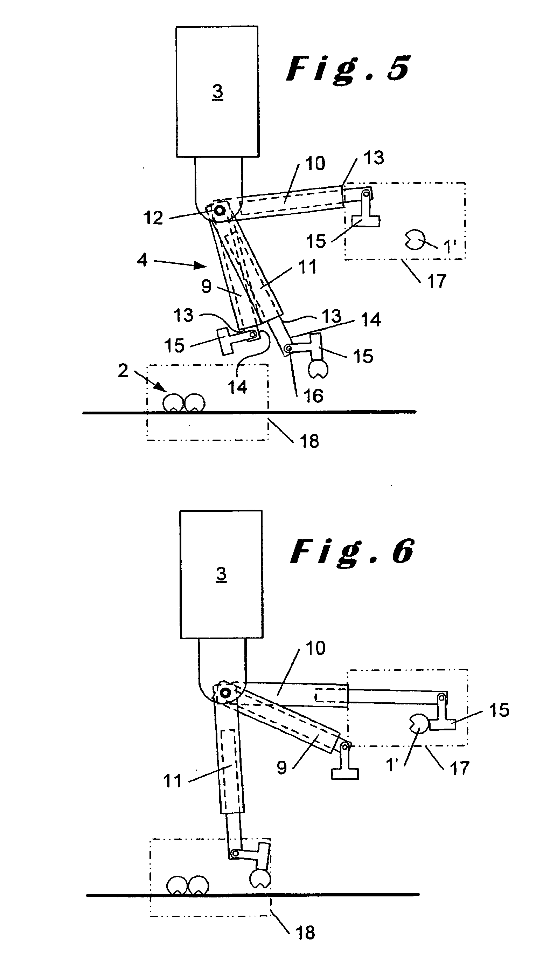

The device according to the invention operates in a way as can be seen in figures 3 to 7. The combination of figures illustrates the operation of the device according to the invention, where the successive figures show the device at successive moments in time within a same time slot. These figures show a device according to a preferred embodiment of the invention, having three sets of arms, as can also be seen in figure 2. In each of the figures 3-7, three arms of a same group are shown. Each arm that is shown is part of a set of arms. Other arms of the set of arms of a shown arm extend parallel to the shown arm and are therefore, looking in the longitudinal direction, not visible. However arms in a set of arms move preferably synchronously and therefore by explaining the movement of one arm in a set, the movement of other arms in the same set of arms is analogue. Figure 5 shows the arms in a same position as figure 2.

Figure 3 shows three arms 9, 10 and 11, each arm being part of a set of arms as explained above, at a moment of time t1 where the device is starting the handling of the profile parts thus not yet carrying a profile part. The figure shows a first profile part to be handled 1, and a stack of profiles 2, to which the profile part 1 is to be transported. Arm 11 is shown in a position in which it has been pivoted about its first end 12, and the length of the arm 11 has been extended by using its telescoping member 13, so that the picking up means 15 are located in the picking-up-area 17. This arm 11 will, when in the picking-up-area, position its picking up means 15 towards the first profile part 1, and thereafter grab the first profile part 1. Arms 9 and 10 are not carrying a profile part and are pivoting about their first end 12 counter clockwise in the direction of the picking-up-area 17.

Figure 4 shows at a moment of time t2 the arm 11 after having grabbed the first profile part and during the movement of the first profile part towards the laying-down-area 18. During this movement, the arm 11 is pivoted clockwise about its first end 12. Arms 9 and 10 are, with respect to the position in figure 3, pivoted counter clockwise into a further position towards the picking-up-area.

Arm 11 carrying the first profile part pivots clockwise while arm 10, not carrying a profile part, pivots counter clockwise. At the moment t3, between the moments t2 and t4, respectively shown in figure 4 and figure 5, arm 11 and arm 10 will be parallel. Because arm 10, moving from the laying-down-area towards the picking-up-area, is more retracted than arm 11, no collision occurs between arm 10 and the profile part loaded by arm 11 despite crossing of these arms. If arm 10 would not be retracted more than arm 11, arm 10 would crash into the profile part handled by arm 11, thereby not allowing the device to work properly.

Figure 5 shows at a moment of time t4 the arm 11 carrying the first profile part and being pivoted clockwise with respect to the first end 12 into a further position, with respect to the position shown in figure 4. The figure 5 further shows a second profile part 1' at the picking-up-area. This second profile part 1' may come from a continuous production process, as explained above, and is to be picked up and transported to the stack of profile parts 2. Arm 10 is shown in a position in which it has been pivoted about its first end 12, and extended using its telescoping member 13, so that the picking up means 15 are located in the picking-up-area 17. This arm 10 will, at a further moment of time t5, position its picking up means 15 towards the second profile part 1', and grab the second profile part 1'. Arm 9 has, with respect to the position as shown in figure 4, pivoted counter clockwise into a further position towards the picking-up-area.

Figure 6 shows at a moment of time t6 the arm 11 carrying the first profile part and being pivoted clockwise around the first end 12 into a further position, with respect to the position shown in figure 5, so as to be now situated in the laying-down-area. At a further moment of time t7, arm 11 will position the first profile part so as to be able to lay down this first profile part 1 in a predetermined manner. Arm 10 is shown in a position in which the picking up means 15 can duly grab the second profile part 1'. Arm 9 has, with respect to the position as shown in figure 5, pivoted counter clockwise into a further position towards the picking-up-area.

Figure 6 further shows how the device according to the invention allows that multiple profile parts are handled at the same moment of time without causing a collision between the handled profile parts. Handling multiple profile parts at the same time allows a substantial increasing of the handling speed in view of prior art handling devices.

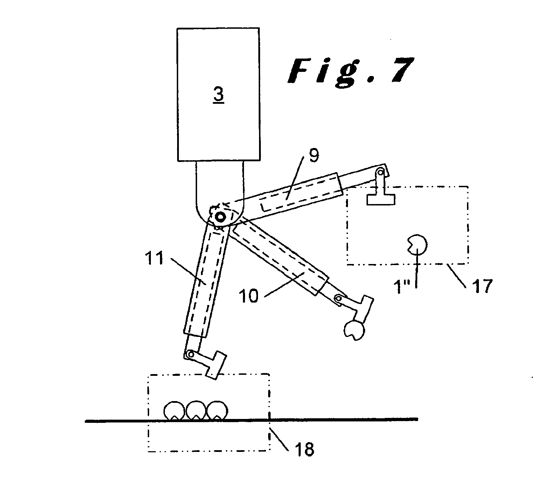

Figure 7 shows at a moment of time t8 the first profile part 1 being added to the stack 2 of profile parts and shows the arm 11, which had carried this first profile part, having released this first profile part and having moved somewhat out of the laying-down-area 18. Arm 10 has grabbed the second profile part, and moved this second profile part already somewhat in the direction of the stack 2 of profile parts. The figure 7 further shows a third profile part 1" at the picking-up-area. Arm 9 is shown in a position in which it has been pivoted about its first end 12, and extended using its telescoping member 13, so that the picking up means 15 are located in the picking-up-area 17. This arm 9 will, in a further moment of time t9, position its picking up means 15 towards the third profile part 1", and grab the latter profile part 1".

The figures 3-7 show that different sets of arms successively handle a profile part from a picking-up-area 17 towards a lying-down-area 18. From this handling movement, a more generic movement can be determined, which is applicable to all devices according to the first embodiment of the invention such as also for example the device as shown in figure 1. In this generic movement, each arm, at its turn, operates in cycles performing each cycle the following succession of steps:
● pivoting the arm about its first end 12 towards the picking-up-area 17 so that the picking up means 15 are located in this area;
● positioning the picking up means horizontally, vertically and preferably axially, with respect to the profile part to be handled so as to allow an adequate grabbing of the profile part, the picking up means being positioned by a combined movement of:
   o pivoting the arm about its first end 12 so as to point the arm into the direction of the picking-up-area;
   o changing the distance between the first end 12 and the second end 14 of the arm so as to bring the picking up means 15 in the picking-up-area;
   o if applicable, rotating the picking up means into a position for adequately grabbing the profile part;
● using the picking up means for grabbing the profile part;
● transporting the profile part towards the laying-down-area whereby the second end follows a first predetermined path, which path is determined so as to avoid obstacles such as the support on which the profile part lays before it has been grabbed;
● positioning the profile part horizontally, vertically and preferably axially at the laying-down-area so that the profile part can be released in a predetermined manner;
● releasing the profile part; and
● moving the arm towards the picking-up-area whereby the second end follows a second predetermined path.

The first path and the second path being determined in such a manner that, at the moment where an arm moving along the first path, and an arm moving along the second path, extend parallel with respect to each other, the arm moving along the first path has its second end more extended then the one of another arm moving along the second path. More extended should be interpreted as in such a manner that the profile part, handled by the arms moving along the first path, is not crashed off by the arms moving along the second path. In practise, this difference in extent can vary from few centimetres to the maximal possible extent of the arm. Preferably, the distance between the first end and the second end of an arm moving along the first path is greater than the distance between the first end and the second end of an arm moving along the second path such as to avoid collision between the arm moving along the second path and the profile part loaded by the arm moving along the first path. The wording greater should be interpreted as greater than 2 cm, preferably greater than 5 cm, more preferably greater than 10 cm, most preferably greater than 20 cm. At least, the wording greater should be interpreted as so that the picking up means do not hinder the movement of the profile part.

Arms that operate together in a same set perform the same steps substantially at the same time so as to handle a profile part in cooperation with each other. Different sets of arms perform the same steps but with a time difference between corresponding steps.

Looking in the longitudinal direction of the profile parts, different sets of arms overlap each other at certain moments in their movement between the picking-up-area and the laying-down-area. This is for example illustrated in figure 2, where arm 9, which is non-loaded, pivots counterclockwise while arm 11, which is loaded, pivots clockwise. Because a non-loaded set of arms, moving from the laying-down-area towards the picking-up-area, is retracted, no collision occurs between this non-loaded set of arms and the loaded set of arms that is transporting a profile part from the picking-up-area towards the laying-down-area. If this non-loaded set of arms would not be retracted, this set of arms would crash into the profile part handled by the loaded set of arms thereby not allowing the device to work properly.

In a preferred embodiment of the invention, the device comprises computer controlled optical means, in particular a camera 19 at the picking-up-area 17 for determining the axial position of the profile part to be handled. In particular for handling non-symmetrical profile parts or profile parts having an irregular sectional shape, it is advantageous to grab these profile parts in a predetermined way so as to be able to axially position these profile parts at the laying-down-position. In particular devices, the axial position of the profile part to be handled is not exactly known. The computer controlled optical means or camera can detect the axial position so that the profile part can be duly grabbed.

Preferably, the movements of the arms are programmed so as to lay the profile parts down at the laying-down-position 18 in a predetermined way. It will be apparent to a skilled person that for many profile parts, there is a preferred way for stacking them. For example for U-shaped profile parts, the preferred pattern will comprise a first U-shaped profile part placed with the opening upward with a second U-shaped profile part with the opening downwards placed on top of and substantially in the first U-shaped profile part. When a profile part is to be laid down in a particular predetermined axial position, the profile part should be grabbed so that the picking up means do not hinder the laying down of the profile part in this particular predetermined axial position. Therefore the computer controlled optical means or camera 19 in the preferred device according to the invention allows, via suitable software, for a picking up means 15 to grab the profile part in such a manner that the picking up means 15 can lay down the profile part at the laying-down-position 18 in this particular predetermined axial position.

If the profiles at the picking-up-area come from a continuous process, the device according to the invention preferably comprises cutting means for cutting the continuous profile into profile parts having a length. Furthermore, the device preferably comprises means for making the profile part come to a stop without thereby affecting the continuous process. The stopped profile part can then be handled by the arms in the device according to the invention. The means for making the profile part come to a stop, can be realized by any such means known in the art. For example it could comprise speeding-up means for accelerating the profile part after cutting thereby creating a distance between the profile part and the continuous profile. This distance creates a time slot in which the profile part can be stopped and grabbed by the arms without the continuous profile being hindered by the profile part.

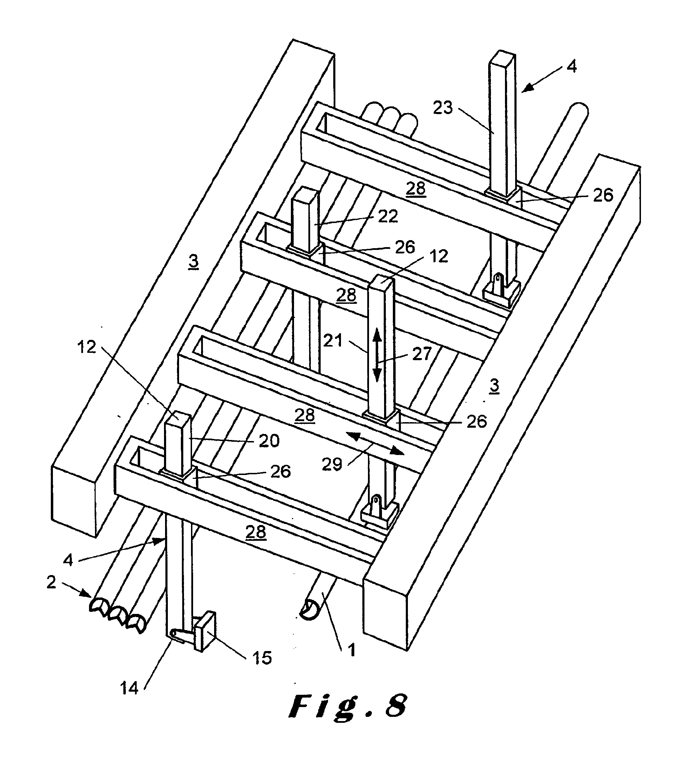

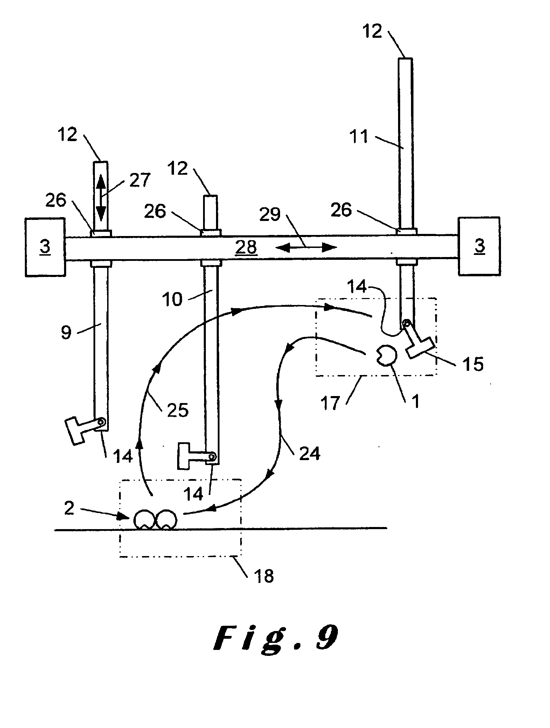

Figure 8 and 9 show the second embodiment of the invention. In this second embodiment, the working principles of the device, in particular the movement of the second ends 14 of the arms with respect to each other and the handling of the profile parts with the grabbing means 15, are identical or at least analogue to the first embodiment described above. In the second embodiment, the structural configuration of the arms 4 differs from the first embodiment. In the second embodiment, the second ends of the arms are moved by a combined horizontal and vertical guidance of the arms, whereas in the first embodiment, the second ends of the arms are moved by a combined pivoting of the arm at the first end and varying of distance between first and second ends.

In the second embodiment, the arms 4 are arranged in an upright position. These arms 4 are each guided in a first guiding means 26 which allows the arms to move in the upright direction as shown by arrow 27, thus along their longitudinal axis. In this first guiding means 26, the arms can be lifted up, as shown in figure 9 by arm 11, and moved downward, as shown in figure 9 by arm 10. The first guiding means 26 is mounted inside a second guiding means 28 which guides the first guiding means 26 and the arms 4 in the lying direction, as shown by arrow 29, thus substantially perpendicular to the longitudinal axis of the arms 4. The second guiding means 28 is mounted to the supporting member 3. The first and second guiding means cooperatively work together to move the second end 14 of the arm 4 along the above-mentioned predetermined paths.

In operation, a first set of arms picks up a profile part at the picking-up-area 17, after which the profile part is moved towards the lying-down-area 18 following the first predetermined path 24. Meanwhile, a second set of arms lies down a profile part at the lying-down-area 18 and moves towards the picking-up-area 17 whereby the second ends 14 of the second set of arms follow the second predetermined path 25. So as to avoid collision between the empty second set of arms and the profile part held by the first set of arms, the second predetermined path 25 should lay, at least at the location where two sets of arms are aligned in the described operation, closer to the supporting member 3 than the first predetermined path 24. Preferably, the supporting member 3 is located above both the picking-up-area 17 and the laying-down-area 18 and the second predetermined path 25 lies completely above the first predetermined path 24.

Figure 8 shows a device according to the second embodiment of the invention but analogue to the device shown in figure 1. Figure 9 shows a device according to the second embodiment of the invention but analogue to the device shown in figure 3.

It will be clear that further embodiments can be designed that fall within the scope of the protection of the present invention. Arms 4 can be designed in very different ways to allow a combined horizontal and vertical movement of one end (the second end 14) of that arm 4. For example one could configure an arm that is guided in a lying guide similar to the arm in the second embodiment, and which arm is telescopic similar to the arm in the first embodiment. In such configuration, the second end of the arm is also moveable in a horizontal (via the lying guide) and in a vertical (via the telescopic means) movement. Such device can therefore have the same advantageous working as the device according to the present invention. Such devices should therefore, although not described in detail in the description, be considered as falling within the scope of protection of the present invention.

## Claims

1. A device for handling profile parts (1) extending in a longitudinal direction and defining an axis parallel to said longitudinal direction, said device comprising means for linearly and/or axially positioning said parts perpendicularly to said longitudinal direction and for conveying said parts and/or for stacking said parts, said device comprising at least one supporting member (3) arranged parallel to said longitudinal direction and provided for supporting means for picking up said parts, **characterised in that** said means for picking up and said means for linearly and/or axially positioning being formed by at least four arms (4) each having a first end (12) and a second end (14) located at a distance from each other, each of said arms (4) comprising at their second end (14) means (15) or grabbing said parts and rotating said parts about said axis, which arms (4) are each mounted to said supporting member (3) and provided with means for imposing to said second end (14) a horizontal and a vertical movement with respect to said supporting member (3), said at least four arms (4) being provided to operate in at least two sets of arms (9, 10, 11), wherein each of said set of arms (9, 10, 11) comprises at least two of said at least four arms (4).

2. The device according to claim 1, **characterised in that** said arms are each pivotably mounted with their first end (12) to said supporting member (3) and each comprise means for varying said distance so that said second end (14) is moveable both in said horizontal and vertical movement with respect to said supporting member (3).

3. The device according to claim 2, **characterised in that** said means for changing said distance comprise a telescoping member.

4. The device according to claim 1, **characterised in that** said arms are arranged substantially upright and are each moveably guided in the upright direction by a first guide (26), which first guide is moveably guided in a lying direction by a second guide (28) which is mounted to said supporting member (3), so that said second end (14) is moveable both in said horizontal and vertical movement with respect to said supporting member (3).

5. The device according to any of the previous claims, **characterised in that** said supporting member (3) is located above said arms.

6. The device according to any of the preceding claims, **characterised in that** said arms (4) extend in a plane substantially perpendicular to said longitudinal direction.

7. The device according to any of the preceding claims, **characterised in that** said arms (4) are arranged in at least two groups (5, 6, 7, 8) of arms located at intervals from each other in function of the length, shape and physical properties of said profile parts (1) to be handled, each group (5, 6, 7, 8) comprising one arm of each of said pairs of arms.

8. The device according to claim 7, **characterised in that** said device comprises at least four groups of arms (5, 6, 7, 8), of which each group comprises at least three arms (9, 10, 11).

9. The device according to any of the preceding claims, **characterised in that** said device comprises computer controlled optical means to detect the transverse sectional shape and position of the profile part (1), cooperating with said arms (4) so as to allow pick up and stacking of the profile part (1) on the basis of said detected shape and position.

10. A method for handling profile parts (1) extending in a longitudinal direction and defining an axis parallel to said longitudinal direction, using at least two sets of arms (9, 10, 11), each set of arms (4) comprising at least two arms (9, 10, 11), each arm has a first end (12) and a second end (14) located at a distance from said first end (12), and is moveably mounted to a supporting member (3) in such a manner that said second end (14) is both vertically and horizontally moveable with respect to said supporting member (3), which supporting member (3) extends parallel to said longitudinal direction, in the method, each arm (4) performs following succession of steps:
● grabbing a profile part (1) of said profile parts with one of said at least two sets of arms (9, 10, 11) at a picking-up-area using picking up means applied at the second end of the arms;
● moving said profile part (1), grabbed by said one of said at least two sets of arms (9, 10, 11), by having said one of said at least two sets of arms (9, 10, 11) moved from said picking-up-area to a laying-down-area along a predetermined first path;
● releasing said profile part (1) from said one of said at least two sets of arms (9, 10, 11) at the laying-down-area;
● moving said one of said at least two sets of arm (9, 10, 11) from said laying-down-area to said picking-up-area along a predetermined second path;
said moving said arms (4) along said first and second path comprising a combined horizontal and vertical movement of said second end of said arms (4) with respect to said supporting member (3), said succession of steps being performed synchronously by arms (4) in a same set of arms (9, 10, 11), different sets of arms (9, 10, 11) independently performing said succession of steps with a time difference between corresponding steps of said succession of steps as a result of which at a moment of time arms of a first set moving along said first path are aligned with arms of a second set moving along said second path, whereby said arms move in such a manner that at least at said moment of time, said second end (14) of said arms moving along said second path is closer to said supporting member (3) than said second end (14) of said arms moving along said first path such as to avoid collision between said arms (4) moving along said second path and said profile part moved by said arms (4) moving along said first path.

11. The method according to claim 10, **characterised in that** said method comprises determining an axial releasing-orientation in which said profile part (1) is to be released at the laying-down-area, said moving said profile part (1) comprises:
● axially orienting said profile part (1) into said determined axial releasing-orientation using rotation means comprised by said picking up means.

12. The method according to claim 11, **characterised in that** said grabbing comprises:
● detecting an axial orientation of the profile part (1) at the picking-up-area using a camera;
● determining an axial grabbing-location based on said detected axial orientation and said determined axial releasing-orientation;
● positioning said grabbing means into said axial grabbing-location
● activating said grabbing means so as to grab said profile part (1).

## Patentansprüche

1. Eine Vorrichtung zum Handhaben von Profilteilen (1), die sich in eine Längsrichtung ausstrecken und eine Achse parallel zur erwähnten Längsrichtung definieren, wobei die erwähnte Vorrichtung Mittel zum linearen und/oder axialen Positionieren der erwähnten Teile senkrecht zur erwähnten Längsrichtung und zum Befördern der erwähnten Teile und/oder zum Stapeln der erwähnten Teile umfasst, wobei die erwähnte Vorrichtung zumindest ein tragendes Element (3) umfasst, welches parallel zur erwähnten Längsrichtung angeordnet ist und zum Tragen von Mitteln zum Aufheben der erwähnten Teile vorgesehen ist, **dadurch gekennzeichnet, dass** die erwähnten Mittel zum Aufheben und die erwähnten Mittel zum linearen und/oder axialen Positionieren durch zumindest vier Arme (4) gebildet sind, die jeweils ein erstes Ende (12) und ein zweites Ende (14) in einem Abstand voneinander haben, wobei die erwähnten Arme (4) an ihrem zweiten Ende (14) Mittel (15) umfassen, um die erwähnten Teile zu ergreifen und die erwähnten Teile um die erwähnte Achse zu drehen, wobei die Arme (4) jeweils am erwähnten tragenden Element (3) montiert sind und mit Mitteln ausgestattet sind, um dem erwähnten zweiten Ende (14) eine horizontale und eine vertikale Bewegung in Bezug zum erwähnten tragenden Element (3) aufzuerlegen, wobei die erwähnte zumindest vier Arme (4) vorgesehen sind, um in zumindest zwei Sätzen von Armen (9, 10, 11) zu funktionieren, wobei jeder erwähnte Satz von Armen (9, 10, 11) zumindest zwei der erwähnten zumindest vier Arme (4) umfasst.

2. Die Vorrichtung nach Anspruch 1, **dadurch gekennzeichnet, dass** die erwähnten Arme jeweils drehbar mit ihrem ersten Ende (12) am erwähnten tragenden Element (3) montiert sind und jeweils Mittel umfassen, um den erwähnten Abstand zu verändern, sodass das erwähnte zweite Ende (14) sowohl in der erwähnten horizontalen als auch vertikalen Bewegung in Bezug auf das erwähnte tragende Element (3) beweglich ist.

3. Die Vorrichtung nach Anspruch 2, **dadurch gekennzeichnet, dass** die erwähnten Mittel zur Veränderung des erwähnten Abstands ein ineinanderschiebbares Element umfassen.

4. Die Vorrichtung nach Anspruch 1, **dadurch gekennzeichnet, dass** die erwähnten Arme im Wesentlichen aufrecht angeordnet sind und jeweils beweglich durch eine erste Führung (26) in die Aufwärtsrichtung geführt werden, wobei die erste Führung beweglich in eine liegende Richtung geführt wird durch eine zweite Führung (28), welche auf dem erwähnten tragenden Element (3) montiert ist, sodass das erwähnte zweite Ende (14) sowohl in der erwähnten horizontalen als auch vertikalen Bewegung in Bezug auf das erwähnte tragende Element (3) beweglich ist.

5. Die Vorrichtung nach irgendeinem der vorigen Ansprüche, **dadurch gekennzeichnet, dass** sich das tragende Element (3) über den erwähnten Armen befindet.

6. Die Vorrichtung nach irgendeinem der vorigen Ansprüche, **dadurch gekennzeichnet, dass** sich die erwähnten Arme (4) in einer Ebene ausstrecken, die im Wesentlichen senkrecht zur erwähnten Längsrichtung ist.

7. Die Vorrichtung nach irgendeinem der vorigen Ansprüche, **dadurch gekennzeichnet, dass** die erwähnten Arme (4) in zumindest zwei Gruppen (5, 6, 7, 8) von Armen angeordnet sind, die sich je nach der Länge, der Form und den physikalischen Eigenschaften der erwähnten zu handhabenden Profilteile (1) in Abständen voneinander befinden, wobei jede Gruppe (5, 6, 7, 8) einen Arm jedes erwähnten Paares von Armen umfasst.

8. Die Vorrichtung nach Anspruch 7, **dadurch gekennzeichnet, dass** die erwähnte Vorrichtung zumindest vier Gruppen von Armen (5, 6, 7, 8) umfasst, wobei jede Gruppe zumindest drei Arme (9, 10, 11) umfasst.

9. Die Vorrichtung nach irgendeinem der vorigen Ansprüche, **dadurch gekennzeichnet, dass** die erwähnte Vorrichtung computergesteuerte optische Mittel umfasst, um die Querschnittsform und Position des Profilteils (1) festzustellen, wobei sie mit den erwähnten Armen (4) zusammenwirkt, sodass das Aufheben und Stapeln des Profilteils (1) auf Grundlage der festgestellten Form und Position ermöglicht werden.

10. Ein Verfahren zum Handhaben von Profilteilen (1), die sich in eine Längsrichtung ausstrecken und eine Achse parallel zur erwähnten Längsrichtung definieren, das zumindest zwei Sätze von Armen (9, 10, 11) verwendet, wobei jeder Satz von Armen (4) zumindest zwei Arme (9, 10, 11) umfasst, jeder Arm ein erstes Ende (12) und ein zweites Ende (14) hat, das sich in einem Abstand vom erwähnten ersten Ende (12) befindet, und so beweglich an einem tragenden Element (3) montiert ist, dass das erwähnte zweite Ende (14) sowohl vertikal als auch horizontal in Bezug zum erwähnten tragenden Element (3) beweglich ist, wobei sich das tragende Element (3) parallel zur erwähnten Längsrichtung ausstreckt, und in dem Verfahren jeder Arm (4) folgende Folge von Schritten ausführt:
● Ergreifen eines Profilteils (1) der erwähnten Profilteile mit einem der erwähnten zumindest zwei Sätze von Armen (9, 10, 11) in einem Aufhebebereich, wobei Aufhebemittel am zweiten Ende der Arme verwendet werden;
● Bewegen des erwähnten Profilteils (1), welches durch den erwähnten einen der erwähnten zumindest zwei Sätze von Armen (9, 10, 11) ergriffen wurde, indem der erwähnte eine der erwähnten zumindest zwei Sätze von Armen (9, 10, 11) entlang eines vorbestimmten ersten Pfades vom erwähnten Aufhebebereich in einen Ablagebereich bewegt wird;
● Freigeben des erwähnten Profilteils (1) aus dem erwähnten einen der erwähnten zumindest zwei Sätze von Armen (9, 10, 11) im Ablagebereich;
● Bewegen des erwähnten einen der erwähnten zumindest zwei Sätze von Armen (9, 10, 11) entlang eines vorbestimmten zweiten Pfades vom erwähnten Ablagebereich zum erwähnten Aufhebebereich;
wobei das erwähnte Bewegen der erwähnten Arme (4) entlang des erwähnten ersten und zweiten Pfades eine kombinierte horizontale und vertikale Bewegung des erwähnten zweiten Endes der erwähnten Arme (4) in Bezug zum erwähnten tragenden Element (3) umfasst, wobei die erwähnte Folge von Schritten durch Arme (4) in ein und demselben Satz von Armen (9, 10, 11) synchron ausgeführt wird, wobei verschiedene Sätze von Armen (9, 10, 11) unabhängig die erwähnte Folge von Schritten mit einem zeitlichen Unterschied zwischen den entsprechenden Schritten der erwähnten Folge von Schritten ausführen, wodurch an einem Zeitpunkt Arme eines ersten Satzes, die sich entlang des erwähnten ersten Pfades bewegen, zu Armen eines zweiten Satzes, die sich entlang des erwähnten zweiten Pfades bewegen, ausgerichtet sind, wobei sich die erwähnten Arme so bewegen, dass sich, zumindest am erwähnten Zeitpunkt, das erwähnte zweite Ende (14) der erwähnten Arme, die sich entlang des erwähnten zweiten Pfades bewegen, näher beim erwähnten tragenden Element (3) befindet, als das erwähnte zweite Ende (14) der erwähnten Arme, die sich entlang des erwähnten ersten Pfades bewegen, sodass eine Kollision zwischen den erwähnten Armen (4), die sich entlang des erwähnten zweiten Pfades bewegen, und dem erwähnten Profilteil, das durch die erwähnten Arme (4) bewegt wird, die sich entlang des erwähnten ersten Pfades bewegen, vermieden wird.

11. Das Verfahren nach Anspruch 10, **dadurch gekennzeichnet, dass** das erwähnte Verfahren die Bestimmung einer axialen Freigabe-Ausrichtung umfasst, in der das erwähnte Profilteil (1) im Ablagebereich freigegeben werden soll, wobei das erwähnte Bewegen von das erwähnte Profilteil (1) Folgendes umfasst:
● axiales Ausrichten des erwähnten Profilteils (1) in der erwähnten bestimmten axialen Freigabe-Ausrichtung unter Verwendung von Rotationsmitteln, die in den erwähnten Aufhebemitteln enthalten sind.

12. Das Verfahren nach Anspruch 11, **dadurch gekennzeichnet, dass** das erwähnte Ergreifen Folgendes umfasst:
● Feststellen einer axialen Ausrichtung des Profilteils (1) im Aufhebebereich unter Einsatz einer Kamera;
● Bestimmen eines axialen Ergreifungsstandorts auf Grundlage der erwähnten festgestellten axialen Ausrichtung und der erwähnten bestimmten axialen Freigabe-Ausrichtung;
● Positionieren der erwähnten Greifmittel an den erwähnten axialen Ergreifungsstandort;
● Aktivieren der erwähnten Greifmittel, um das erwähnte Profilteil (1) zu ergreifen.

## Revendications

1. Un dispositif pour manipuler des pièces profilées (1) s'étendant dans une direction longitudinale et définissant un axe parallèle à ladite direction longitudinale, ledit dispositif comprenant des moyens pour positionner linéairement et/ou axialement lesdites pièces perpendiculairement à ladite direction longitudinale et pour transporter lesdites pièces et /ou pour empiler lesdites pièces, ledit dispositif comprenant au moins un organe de support (3) disposé parallèlement à ladite direction longitudinale et prévu pour supporter des moyens pour prendre lesdites pièces, **caractérisé en ce que** lesdits moyens destinés à prendre et lesdits moyens destinés à positionner linéairement et/ou axialement sont formés par au moins quatre bras (4) ayant chacun une première extrémité (12) et une deuxième extrémité (14) situées à une distance l'une de l'autre, chacun desdits bras (4) comprenant à leur deuxième extrémité (14) des moyens (15) pour saisir lesdites pièces et pour faire tourner lesdites pièces autour dudit axe, lesquels bras (4) sont montés chacun sur ledit organe de support (3) et pourvus de moyens pour imposer à ladite deuxième extrémité (14) un mouvement horizontal et un mouvement vertical par rapport audit organe de support (3), lesdits au moins quatre bras (4) étant prévus pour fonctionner dans au moins deux jeux de bras (9, 10, 11), chacun desdits jeux de bras (9, 10, 11) comprenant au moins deux desdits au moins quatre bras (4).

2. Le dispositif selon la revendication 1, **caractérisé en ce que** lesdits bras sont montés chacun de manière pivotante par leur première extrémité (12) sur ledit organe de support (3) et comprennent chacun des moyens pour faire varier ladite distance de sorte que ladite deuxième extrémité (14) peut être déplacée tant dans ledit mouvement horizontal que dans ledit mouvement vertical par rapport audit organe de support (3).

3. Le dispositif selon la revendication 2, **caractérisé en ce que** lesdits moyens pour modifier ladite distance comprennent un organe télescopique.

4. Le dispositif selon la revendication 1, **caractérisé en ce que** lesdits bras sont disposés sensiblement debout et sont guidés chacun de manière mobile dans la direction debout par un premier guide (26), lequel premier guide est guidé de manière mobile dans une direction couchée par un deuxième guide (28) qui est monté sur ledit organe de support (3), de sorte que la deuxième extrémité (14) peut être déplacée tant dans le mouvement horizontal que dans le mouvement vertical par rapport audit organe de support (3).

5. Le dispositif selon l'une quelconque des revendications précédentes, **caractérisé en ce que** ledit organe de support (3) est situé au-dessus desdits bras.

6. Le dispositif selon l'une quelconque des revendications précédentes, **caractérisé en ce que** lesdits bras (4) s'étendent dans un plan sensiblement perpendiculaire à ladite direction longitudinale.

7. Le dispositif selon l'une quelconque des revendications précédentes, **caractérisé en ce que** lesdits bras (4) sont agencés en au moins deux groupes (5, 6, 7, 8) de bras situés à intervalles les uns des autres en fonction de la longueur, de la forme et des propriétés physiques desdites pièces profilées (1) à manipuler, chaque groupe (5, 6, 7, 8) comprenant un bras de chacune desdites paires de bras.

8. Le dispositif selon la revendication 7, **caractérisé en ce que** ledit dispositif comprend au moins quatre groupes (5, 6, 7, 8) de bras, dont chaque groupe comprend au moins trois bras (9, 10, 11).

9. Le dispositif selon l'une quelconque des revendications précédentes, **caractérisé en ce que** ledit dispositif comprend des moyens optiques commandés par ordinateur pour détecter la forme de section transversale et la position de la pièce profilée (1), coopérant avec lesdits bras (4) afin de permettre de prendre et d'empiler la pièce profilée (1) sur la base desdites forme et position détectées.

10. Un procédé pour manipuler des pièces profilées (1) s'étendant dans une direction longitudinale et définissant un axe parallèle à ladite direction longitudinale, utilisant au moins deux jeux de bras (9, 10, 11), chaque jeu de bras (4) comprenant au moins deux bras (9, 10, 11), chaque bras a une première extrémité (12) et une deuxième extrémité (14) située à une distance de ladite première extrémité (12) et est monté de manière mobile sur un organe de support (3) de telle manière que ladite deuxième extrémité (14) puisse être déplacée tant verticalement qu'horizontalement par rapport audit organe de support (3), lequel organe de support (3) s'étend parallèlement à ladite direction longitudinale, dans le procédé, chaque bras (4) effectue la séquence d'étapes suivante :
- saisir une pièce profilée (1) desdites pièces profilées avec un desdits au moins deux jeux de bras (9, 10, 11) dans une zone de prise en utilisant des moyens de prise appliqués à la deuxième extrémité des bras ;
- déplacer ladite pièce profilée (1), saisie par ledit un desdits au moins deux jeux de bras (9, 10, 11), en déplaçant ledit un desdits au moins deux jeux de bras (9, 10, 11) de la zone de prise vers la zone de pose le long d'un premier chemin prédéterminé ;
- libérer ladite pièce profilée (1) dudit un desdits au moins deux jeux de bras (9, 10, 11) dans la zone de pose ;
- déplacer ledit un desdits au moins deux jeux de bras (9, 10, 11) de ladite zone de pose vers ladite zone de prise le long d'un deuxième chemin prédéterminé ;
ledit déplacement desdits bras (4) le long dudit premier et dudit deuxième chemin comprenant un mouvement horizontal et vertical combiné de ladite deuxième extrémité desdits bras (4) par rapport audit organe de support (3), ladite séquence d'étapes étant effectuée de manière synchrone par des bras (4) dans un même jeu de bras (9, 10, 11), différents jeux de bras (9, 10, 11) effectuant indépendamment ladite séquence d'étapes avec une différence de temps entre étapes correspondantes de ladite séquence d'étapes, à la suite de quoi à un moment dans le temps des bras d'un premier jeu se déplaçant le long dudit premier chemin sont alignés avec des bras d'un deuxième jeu se déplaçant le long dudit deuxième chemin, lesdits bras se déplaçant d'une manière telle qu'au moins audit moment dans le temps, ladite deuxième extrémité (14) desdits bras se déplaçant le long dudit deuxième chemin est plus proche dudit organe de support (3) que ladite deuxième extrémité (14) desdits bras se déplaçant le long dudit premier chemin de manière à éviter une collision entre lesdits bras (4) se déplaçant le long dudit deuxième chemin et ladite pièce profilée déplacée par lesdits bras (4) se déplaçant le long dudit premier chemin.

11. Le procédé selon la revendication 10, **caractérisé en ce que** ledit procédé comprend la détermination d'une orientation de libération axiale dans laquelle ladite pièce profilée (1) est à libérer dans la zone de pose, ledit déplacement de ladite pièce profilée (1) comprend :
- l'orientation axiale de ladite pièce profilée (1) dans ladite orientation de libération axiale déterminée en utilisant des moyens de rotation compris par lesdits moyens de prise.

12. Le procédé selon la revendication 11, **caractérisé en ce que** ladite saisie comprend :
- la détection d'une orientation axiale de la pièce profilée (1) dans la zone de prise en utilisant une caméra ;
- la détermination d'un emplacement de saisie axiale sur la base de ladite orientation axiale détectée et de ladite orientation de libération axiale déterminée ;
- le positionnement lesdits moyens de saisie dans ledit emplacement de saisie axiale ;
- l'activation desdits moyens de saisie de manière à saisir ladite pièce profilée (1).
